**Europäisches Patentamt**

**European Patent Office**

**Office européen des brevets**

(19)

(11) Veröffentlichungsnummer: **0 084 079**
**B1**

(12) # EUROPÄISCHE PATENTSCHRIFT

(45) Veröffentlichungstag der Patentschrift:
**14.09.88**

(51) Int. Cl.⁴: **G 01 D 9/00**

(21) Anmeldenummer: **82104751.1**

(22) Anmeldetag: **29.05.82**

(54) **Linearschreiber.**

(30) Priorität: **03.09.81  DE 8125662 U**

(43) Veröffentlichungstag der Anmeldung:
**27.07.83 Patentblatt 83/30**

(45) Bekanntmachung des Hinweises auf die Patenterteilung:
**14.09.88 Patentblatt 88/37**

(84) Benannte Vertragsstaaten:
**FR**

(56) Entgegenhaltungen:
**DE - A - 2 622 447**
**DE - A - 2 829 921**
**US - A - 3 868 696**

**BBC-NACHRICHTEN, Band 59, Nr. 8/9, 1977, Seiten 370-375, Mannheim, DE; F. PUSCHBAN: "Neuer Kompensations-Linienschreiber mit Linearmotor".**
**POWER, Band 115, Nr. 8, August 1971, Seiten 60-62, New York, US; T.C. ELLIOTT: "Graphic recorders adapt to times".**

(73) Patentinhaber: **VDO Adolf Schindling AG, Gräfstrasse 103, D-6000 Frankfurt/Main (DE)**

(72) Erfinder: **Byeli, Horst, Theodor Storm Strasse 15, D-3008 Garbsen 4 (DE)**

(74) Vertreter: **Könekamp, Herbert, Dipl.-Ing., Sodener Strasse 9, D-6231 Schwalbach (DE)**

## Beschreibung

Die Erfindung bezieht sich auf einen Linearschreiber mit aus einer Schreibspitze und einem Tintentank bestehenden Faserschreibfedern, die jeweils mit einem Anzeigefähnchen versehen und mittels eines Führungsschlittens entlang einer Skala verfahrbar sind, wobei jede Skala um eine waagrecht verlaufende Achse hochklappbar gehalten ist, und wobei die Faserschreibfedern durch Verschiebung in Richtung auf die Skalen herausnehmbar sind. Ein solcher Linearschreiber ist aus der DE-A-2 622 447 bekannt.

Die Faserschreibfedern werden nach Aufbrauch des Tintenvorrates dem Linearschreiber entnommen und durch neue ersetzt. Da die Tintentanks, die im Hinblick auf eine grosse Strichlänge möglichst voluminös gehalten werden, hinter den Skalen angeordnet sind, müssen zum Zwecke der Austauschbarkeit der Faserschreibfedern die Skalen so befestigt sein, dass sie den Austausch der Faserschreibfedern nicht behindern. Die Abdeckung der Tintentanks durch die Skalen ist nicht zu vermeiden, da auch die Skalen so gross wie möglich ausgeführt werden müssen, damit die Anzeige deutlich ablesbar ist.

Bei den bekannten Linearschreibern sind die Faserschreibfedern nur bei aus dem Gehäuse gezogenem Messeinsatz austauschbar. Vielfach werden während des Austauschs einer Faserschreibfeder die benachbarten Faserschreibfedern funktionsuntüchtig, so dass es auch dort zu einer Unterbrechung der Aufzeichnung kommt. Letzteres ist auch bei dem Linearschreiber nach der DE-A-2 622 447 der Fall. Bei diesem Linearschreiber sind die Skalen um Achsen verschwenkbar, die sich relativ weit entfernt von den Skalen befinden. Dadurch müssen bei einer Entnahme der untersten Faserschreibfeder nicht nur alle darüber liegenden Skalen sondern auch alle darüber befindlichen Faserschreibfedern hochgeklappt werden. Ein besonderer Nachteil dieses Linearschreibers besteht darin, dass neben den Skalen auch die Faserschreibfedern verschwenkbar angeordnet werden müssen, was den Austausch des Tintentanks zusätzlich erschwert.

Der Erfindung liegt die Aufgabe zugrunde, einen Linearschreiber der eingangs genannten Art zu entwickeln, bei dem ein Austausch der Faserschreibfedern möglichst einfach und ohne Unterbrechung der Aufzeichnung benachbarter Faserschreibfedern durchführbar ist.

Diese Aufgabe wird erfindungsgemäss durch die im Anspruch 1 angegebenen Massnahmen gelöst.

Durch diese erfindungsgemässe Gestaltung klappt die vor dem jeweiligen Tintentank befindliche Skala selbsttätig hoch, wenn man von Hand an dem Kapillarröhrchen einer Faserschreibfeder zieht und dadurch der Tintentank gegen die Skala gelangt. Das Anzeigefähnchen hat dann soviel Abstand von der Skala, dass es das Hochklappen der Skala nicht behindert. Damit ist ein Austausch von Faserschreibfedern ohne Ausbau des Messeinsatzes und ohne Störung benachbarter Faserschreibfedern möglich.

Konstruktiv besonders einfach und billig gestaltet sich der Linearschreiber durch die im Anspruch 2 angegebene Massnahme.

Durch die im Anspruch 3 gekennzeichnete, vorteilhafte Ausgestaltung der Erfindung wird vermieden, dass die Scharnierschenkel durch die auf sie befestigte Skala verspannt werden, so dass sie leichtgängig verschwenkbar bleiben und aufgrund ihres Eigengewichtes sowie des Gewichtes der Skala stets von selbst in eine senkrechte Lage schwenken.

Durch die im Anspruch 4 angegebene Ausgestaltung der Erfindung wird die Skalenlage im Betriebszustand stabilisiert, so dass die Skalen auf jeden Fall in richtige Stellung gelangen und dort auch bei Schwingungen des Linearschreibers oder einer leichten Schrägstellung verbleiben. Dieser Effekt könnte natürlich auch dadurch erreicht werden, dass man die Skalen durch Federkräfte in Betriebsspannung vorspannt.

Um beim Herausziehen einer Faserschreibfeder zu erreichen, dass die zugeordnete Skala mit einem grösstmöglichen Hebelarm angehoben wird, ist die in Anspruch 5 angegebene Massnahme zweckmässig.

Günstig ist auch die im Anspruch 6 angegebene Ausgestaltung der Erfindung. Sie ermöglicht es, beim Einsetzen einer neuen Faserschreibfeder mit der rückwärtigen Seite des Tintentanks die entsprechende Skala anzuheben, so dass anschliessend die Faserschreibfeder in die Blechhalterung eingeschoben werden kann. Es ist somit möglich, den Austausch einer Faserschreibfeder einhändig durchzuführen.

Die Erfindung lässt zahlreiche Ausführungsformen zu. Eine davon ist in der Zeichnung dargestellt und wird nachfolgend beschrieben. Die Zeichnung zeigt in

Figur 1 den die Erfindung betreffenden Teil eines Linearschreibers von der Seite gesehen,

Figur 2 eine Einzelheit des Linearschreibers im vergrösserten Massstab von der Seite gesehen,

Figur 3 eine Ansicht von vorn auf den in Figur 1 dargestellten Teil eines Linearschreibers gemäss der Erfindung.

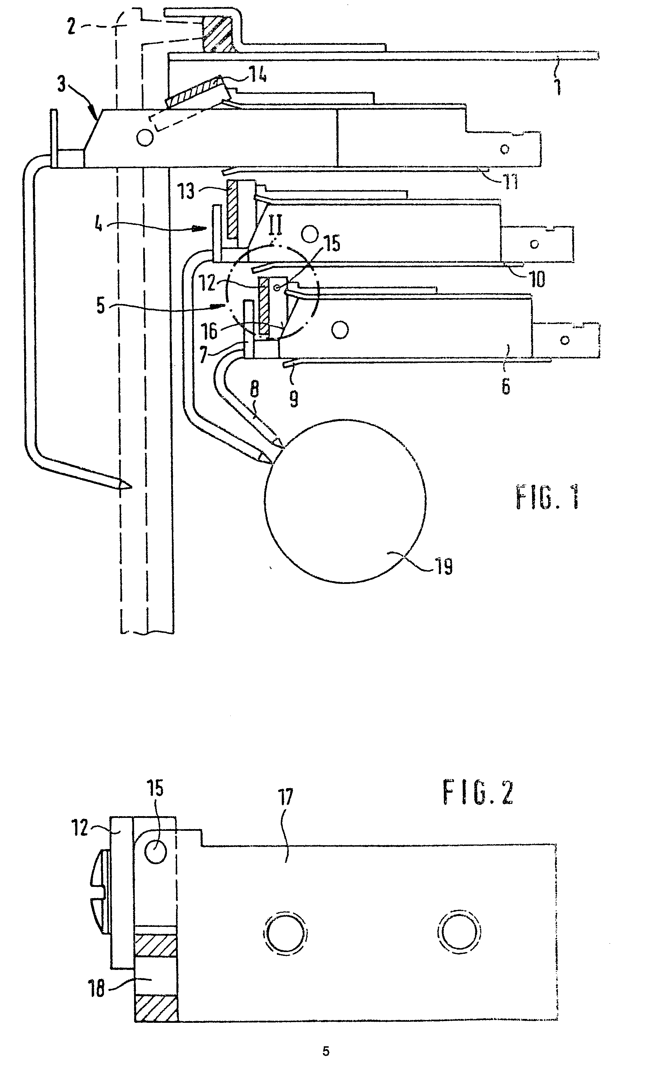

Die Figur 1 zeigt einen Teil eines Gehäuses 1 eines Linearschreibers. Gestrichelt dargestellt ist die obere Hälfte einer Türe 2, welche den Linearschreiber nach vorn verschliesst. Im Gehäuse 1 sind übereinander drei Faserschreibfedern 3, 4, 5 angeordnet. Jede Faserschreibfeder 3, 4, 5 hat einen Tintentank 6, ein Anzeigefähnchen 7 sowie eine Schreibspitze 8. Die Faserschreibfedern sind in Blechhalterungen 9, 10, 11 von vorn einschiebbar. Die Figur 1 lässt erkennen, dass die Blechhalterungen 9, 10, 11 nach vorn versetzt derart angeordnet sind, dass die oberste Blechhalterung 11 am nächsten zur Türe 2 und die unterste Blechhalterung 9 am weitesten entfernt von der Türe 2 endet. Dadurch sind natürlich auch die in die Blechhalterungen 9, 10, 11 eingeschobenen Tintentanks 6 zueinander versetzt. In der Zeichnung ist die oberste Faserschreibfeder 3 nicht vollständig in die Blechhalterung 11 eingeschoben dargestellt, sondern in halb herausgezogenem Zustand gezeichnet.

Vor jeder der Faserschreibfedern 3, 4, 5 ist eine Skala 12, 13, 14 angeordnet. Jede der Skalen 12, 13, 14 ist um eine oberhalb der Faserschreibfedern 3, 4, 5 waagerecht verlaufende Achse 15 klappbar, damit die Skalen 12, 13, 14 das Einschieben oder Herausziehen der Faserschreibfedern 3, 4, 5 nicht behindern. Um zu erreichen, dass beim Herausziehen der Faserschreibfedern 3, 4, 5 die Skalen 12, 13, 14 selbsttätig und mit einem möglichst grossen Moment hochgeschwenkt werden, weisen die Tintentanks 6 der Faserschreibfeder 3, 4, 5 jeweils eine zur senkrechten positiv geneigte Stirnfläche 16 auf. Dadurch gelangen die Skalen 12, 13, 14 jeweils mit ihren untersten Längskanten gegen die Stirnfläche 16, so dass das Hochklappen mit einem möglichst grossen Hebelarm erfolgt.

Zum Verständnis der Gesamtanordnung ist in Figur 1 eine Papiertransportrolle 19 eingezeichnet, auf der das zu beschriftende Papier aufzuspannen ist.

Figur 2 zeigt vergrössert, wie die Skala 12 mittels der waagerecht verlaufenden Achse 15 an einem gehäusefest im Gehäuse 1 angeordneten Bauteil 17 angelenkt ist. Unterhalb der Achse 15 ist in dem Bauteil 17 ein kleiner Permanentmagnet 18 angeordnet, durch den die Skala 12 in senkrechter Betriebsposition gehalten wird.

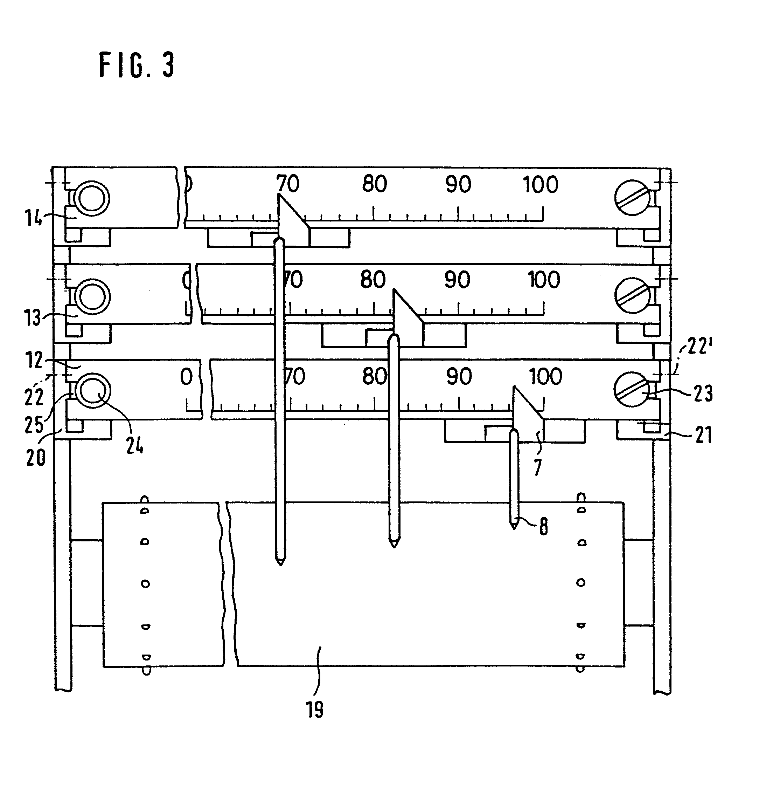

Die Figur 3 lässt die übereinander angeordneten Skalen 12, 13, 14, die Anzeigefähnchen 7 und die Schreibspitzen 8 sowie die Papiertransportrolle 19 erkennen. Weiterhin zeigt die Figur 3, dass die Skalen 12, 13, 14 mit ihren Enden jeweils auf einem Scharnierschenkel 20, 21 befestigt sind. Diese Scharnierschenkel 20, 21 sind, um in Figur 2 konkret dargestellte Achsen 15 schwenkbar. In Figur 3 sind Mittellinien 22, 22′ dieser Achsen 15 eingezeichnet.

Auf den in der Zeichnung gesehen rechten Scharnierschenkeln 21 sind die Skalen 12, 13, 14 jeweils mit Schrauben 23 unverschiebbar befestigt, während sie auf den in der Zeichnung gesehen linken Scharnierschenkeln 20 mittels Bolzen 24 gehalten sind, der durch ein Langloch 25 der Skalen 12, 13, 14 greift, so dass die Skalen relativ zu den Scharnierschenkeln verschiebbar gehalten sind.

Bei dem beschriebenen Linearschreiber werden die Faserschreibfedern wie folgt ausgetauscht. Zunächst ergreift man mit einer Hand das Kapillarröhrchen, beispielsweise der Faserschreibfeder 5 und zieht daran solange, bis dass die Stirnfläche 16 des Tintentanks 6 gegen die Skala 12 gelangt. Bei weiterem Ziehen schwenkt die Skala 12 selbsttätig nach oben, wie das bei der Skala 14 dargestellt ist. Die Faserschreibfeder kann nunmehr ganz aus ihrer Blechhalterung 9, 10, 11 herausgezogen werden. Anschliessend klappt die jeweilige Skala 12, 13, 14 selbsttätig zurück in ihre Betriebsstellung.

Will man nun eine neue Faserschreibfeder 3, 4 oder 5 einsetzen, dann kann man mit der Rückseite des Tintenkörpers 6 der Faserschreibfeder 3, 4 oder 5 die entsprechende Skala 12, 13, 14 zunächst anheben und dann den Tintenkörper 6 in die Blechhalterung 9, 10, 11 schieben. Damit ist es möglich, den Austausch einer Faserschreibfeder einhändig durchzuführen.

### Patentansprüche

1. Linearschreiber mit aus einer Schreibspitze (8) und einem Tintentank (6) bestehenden Faserschreibfedern (3, 4, 5), die jeweils mit einem Anzeigefähnchen (7) versehen und mittels eines Führungsschlittens entlang einer Skala (12, 13, 14) verfahrbar sind, wobei jede Skala (12, 13, 14) um eine waagerecht verlaufende Achse (15) hochklappbar gehalten ist, und wobei die Faserschreibfedern (3, 4, 5) durch Verschiebung in Richtung auf die Skalen (12, 13, 14) herausnehmbar sind, dadurch gekennzeichnet, dass die Achse (15) im Nahbereich der jeweiligen Skala (12, 13, 14) und oberhalb des jeweiligen Tintentanks (6) verläuft, und dass die Tintentanks (6) derart ausgebildet sind, dass ihre Stirnflächen (16) beim Herausziehen der Faserschreibfedern (3, 4, 5) aus ihrer Betriebsstellung gegen die jeweilige Skala (12, 13, 14) drücken und diese um die Achsen (15) nach oben schwenken.

2. Linearschreiber nach Anspruch 1, dadurch gekennzeichnet, dass jede Skala (12, 13, 14) mit ihren beiden Enden jeweils auf einem hängenden Scharnierschenkel (20, 21) befestigt ist.

3. Linearschreiber nach Anspruch 1 oder einem der folgenden, dadurch gekennzeichnet, dass jede Skala (12, 13, 14) jeweils auf einem Scharnierschenkel (21) festgeschraubt und am anderen Scharnierschenkel (20) in Längsrichtung der Skala (12, 13, 14) verschiebbar gehalten ist.

4. Linearschreiber nach Anspruch 1 oder einem der folgenden, dadurch gekennzeichnet, dass zumindest ein Scharnierschenkel (20, 21) durch einen Permanentmagneten (18) in seiner senkrechten Stellung fixiert ist.

5. Linearschreiber nach Anspruch 1 oder einem der folgenden, dadurch gekennzeichnet, dass die der Skala (12, 13, 14) zugewandte Stirnfläche (16) jedes Tintentanks (6) zur Senkrechten positiv geneigt verläuft.

6. Linearschreiber nach Anspruch 1 oder einem der folgenden, dadurch gekennzeichnet, dass die Skalen (12, 13, 14) und Faserschreibfedern (3, 4, 5) stufenförmig von unten nach oben in Richtung der Schreibertüre (2) – also nach vorn hin – versetzt angeordnet sind.

### Claims

1. Line recorder, having fibre pens (3, 4, 5) which comprise a writing tip (8) and an ink tank (6), and are each provided with an indicating tab (7) and are movable by means of a guide slide along a scale (12, 13, 14), each scale (12, 13, 14) being held so as to be upwardly pivotable about a horizontally disposed pivot pin (15), and the fibre pens (3, 4, 5) being removable by displacement in the direction towards the scales (12, 13, 14), characterised in that the pivot pin (15) is situated in the vicinity of the respective scale (12, 13, 14) and extends above the respective ink tank (6), and that the ink tanks (6) are so constructed that their end faces (16), when the fibre pens (3, 4, 5) are pulled out of their operative position, press against the respective scales (12, 13, 14) and pivot the latter upwardly about the pivot pins (15).

2. Line recorder according to claim 1, characterised in that each scale (12, 13, 14) is secured at each of its two ends on a suspended hinge arm (20, 21).

3. Line recorder according to claim 1 or one of the following claims, characterised in that each scale (12, 13, 14) is in each case screwed securely on one hinge arm (21) and is held on the other hinge arm (20) in such a manner as to be displaceable in the longitudinal direction of the scale (12, 13, 14).

4. Line recorder according to claim 1 or one of the following claims, characterised in that at least one hinge arm (20, 21) is fixed in its vertical position by a permanent magnet (18).

5. Line recorder according to claim 1 or one of the following claims, characterised in that that end face (16) of each ink tank (6) which is directed towards the scale (12, 13, 14) extends at a positive inclination relatively to the vertical.

6. Line recorder according to claim 1 or one of the following claims, characterised in that the scales (12, 13, 14) and fibre pens (3, 4, 5) are arranged offset stepwise in the upward direction towards the recorder door (2) — in other words, forwardly offset.

**Revendications**

1. Enregistreur ou traceur linéaire comportant des instruments (3, 4, 5) de traçage en fibre, constitués par une pointe (8) d'écriture et un réservoir (6) d'encre, qui sont munis dans chaque cas d'un petit index (7) d'affichage et peuvent se déplacer au moyen d'un coulisseau de guidage le long d'une échelle (12, 13, 14) graduée, chaque échelle (12, 13, 14) pouvant être maintenue de façon à pouvoir se relever sur un axe (15) qui s'étend horizontalement, et les instruments (3, 4, 5) de traçage en fibre pouvant être retirés quand on les déplace en direction des échelles (12, 13, 14), enregistreur caractérisé en ce que l'axe (15) s'étend dans une zone proche de l'échelle (12, 13, 14) considérée et au-dessus du réservoir (6) d'encre considéré et en ce que les réservoirs (6) d'encre sont conformés de sorte que leurs surfaces de bout (16) poussent contre l'échelle (12, 13, 14) considérée, lors du retrait des instruments (3, 4, 5) de traçage de leur position de fonctionnement, et font pivoter vers le haut l'échelle sur son axe (15).

2. Enregistreur linéaire selon la revendication 1, caractérisé en ce que chaque échelle (12, 13, 14) est fixée par ses deux extrémités dans chaque cas sur une branche (20, 21) de charnière pendante.

3. Enregistreur linéaire selon la revendication 1 ou l'une des suivantes, caractérisé en ce que chaque échelle (12, 13, 14) est fixée par vissage dans chaque cas sur une branche (21) de charnière et est maintenue sur l'autre branche (20) de charnière de façon à pouvoir se déplacer dans le sens longitudinal des échelles (12, 13, 14).

4. Enregistreur linéaire selon la revendication 1 ou l'une des suivantes, caractérisé en ce qu'au moins une des branches (20, 21) de charnière est fixée au moyen d'un aimant permanent (18) en position verticale.

5. Enregistreur linéaire selon la revendication 1 ou l'une des suivantes, caractérisé en ce que la surface de bout (16), tournée vers l'échelle (12, 13, 14), de chaque réservoir (6) d'encre, est inclinée positivement par rapport à la verticale.

6. Enregistreur linéaire selon la revendication 1 ou l'une des suivantes, caractérié en ce que les échelles (12, 13, 14) et les instruments (3, 4, 5) de traçage en fibre sont disposés avec un décalage, de façon étagée de bas en haut en direction de la porte (2) de l'enregistreur, c'est-à-dire vers l'avant.

0 084 079

FIG. 1

FIG. 2

# FIG. 3